# EUROPÄISCHE PATENTSCHRIFT

(11) **EP 0 916 557 B1**
(45) Veröffentlichungstag und Bekanntmachung des Hinweises auf die Patenterteilung: **21.01.2004**
(21) Anmeldenummer: 98121130.3
(22) Anmeldetag: 10.11.1998
(51) Int. Cl.: B60R 22/34

(54) **Schlossstraffer**
Buckle retractor
Rétracteur de boucle

(30) Priorität: 14.11.1997 DE 29720213 U
(43) Veröffentlichungstag der Anmeldung: 19.05.1999
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- DE-A- 4 224 699
- DE-U- 29 608 210
- DE-U- 29 706 024

## Beschreibung

Die Erfindung betrifft einen Schloßstraffer für ein neben dem Fahrzeugsitz angeordnetes Gurtschloß, der eine Kolben/Zylinder-Einheit mit einem Zylinder und einem in dessen Inneren angeordneten Kolben sowie ein den Kolben und das Gurtschloß verbindendes, elastisch auslenkbares Zugübertragungsmittel umfaßt.

Bei Sicherheitsgurtsystemen, die eine Gurtstraffvorrichtung mit einer Kolben/Zylinder-Einheit aufweisen, wird üblicherweise ein flexibles Zugseil als Zugübertragungsmittel zwischen dem Kolben der Straffvorrichtung und dem Gurtschloß verwendet. Das flexible Zugseil dient zugleich als Verankerung für das Gurtschloß und ermöglicht bei angelegtem Sicherheitsgurt eine Ausrichtung des Gurtschlosses zur Annäherung an den Gurtbandverlauf. Je geringer das Biegewiderstandsmoment des Zugseils ausgelegt ist, desto besser erfolgt die Angleichung der Orientierung des Gurtschlosses an den Gurtbandverlauf. Beim Einstecken der Steckzunge in das Gurtschloß erweist sich ein zu geringes Biegewiderstandsmoment der Verankerung jedoch als nachteilig, da das Gurtschloß leicht seitlich ausweichen kann.

In der DE 42 24 699 A1 ist ein Kunststoffgelenk zur gelenkigen Verbindung zweier Bauteile offenbart, mit einem weichelastischen Gelenkelement, das mit seinen Enden jeweils direkt an die beiden Bauteile angespritzt ist.

Die gattungsbildende DE 297 06 024 U1 zeigt einen Schloßstraffer für ein Sicherheitsgurtsystem, mit einem ein Zugübertragungsmittel umgebendes Gehäuse, das den Zwischenraum zwischen Schloßkopf und Antriebseinrichtung abschirmt und das beim Straffvorgang relativ zu dem Schloßkopf und/oder zu der Antriebseinrichtung verschoben wird.

Die DE 296 08 210 U1 zeigt einen Linearantrieb für einen Rückstrammer eines Fahrzeuginsassenrückhaltesystems, mit einer Kolben-Zylinder-Einheit und einem an den Kolben angeschlossenen Zugelement, der sich durch eine besonders geringe Baulänge auszeichnet.

Die Erfindung schafft einen Schloßstraffer, der eine optimale Ausrichtung des Gurtschlosses erlaubt. Das Gurtschloß weicht beim Einstecken der Steckzunge nicht in Richtung vom Fahrzeugsitz weg aus, paßt sich aber dennoch bei angelegtem Sicherheitsgurt dem Gurtbandverlauf leicht an. Bei einem Schloßstraffer der eingangs genannten Art wird dies erfindungsgemäß dadurch erreicht, daß das Biegewiderstandsmoment des Zugübertragungsmittels in Richtung zum Fahrzeugsitz hin geringer ist als in Richtung vom Fahrzeugsitz weg.

Die Anpassung des Gurtschlosses samt des Zugübertragungsmittels an den Verlauf des Sicherheitsgurtes kann dadurch verbessert werden, daß des Zugübertragungsmittels das Biegewiderstandsmoment in Fahrzeuglängsrichtung, das heißt in Richtung Fahrzeugfront oder Fahrzeugheck, geringer ist als in Richtung zum Fahrzeugsitz hin.

Gemäß einer bevorzugten Ausgestaltung der Erfindung weist der Schloßstraffer ein elastisch auslenkbares Abstützteil auf, das auf der vom Fahrzeugsitz abgewandten Seite an das Zugübertragungsmittel anschließt und es in Richtung vom Fahrzeugsitz weg abstützt. Dadurch wird das Biegewiderstandsmoment des Zugübertragungsmittels in Richtung vom Fahrzeugsitz weg erhöht, was ein zu leichtes Ausweichen des Gurtschlosses beim Einstecken der Steckzunge verhindert. Dagegen kann das Gurtschloß ohne Aufwendung größerer Kräfte zum Fahrzeugsitz hin verstellt werden. Dies ist bei angelegtem Sicherheitsgurt Voraussetzung für einen optimalen Gurtbandverlauf.

Eine einfache Möglichkeit, das Abstützteil und das Zugübertragungsmittel miteinander zu koppeln, besteht darin, beide als Blattfeder auszubilden und sie aneinander zu befestigen, so daß sich ein Blattfederpaket ergibt. Die Befestigung des Kolbens an der Blattfeder oder am Blattfederpaket erfolgt vorzugsweise durch Aufpressen des Kolbens oder eines Teils des Kolbens auf einem Ende des Zugübertragungsmittels. Eine besonders stabile Verbindung zwischen Kolben und Zugübertragungsmittel ergibt sich durch Vorsehen von Ausnehmungen im Zugübertragungsmittel, in die der aufgepreßte Kolben oder das aufgepreßte Teil des Kolbens zumindest teilweise eindringt. Auf diese Weise ergibt sich eine formschlüssige Verbindung. Darüber hinaus kann auch das Zugübertragungsmittel und/oder das Abstützteil als Blattfederpaket ausgebildet sein.

Der Schloßstraffer kann einen im Querschnitt kreiszylindrischen Zylinder oder einen im Querschnitt ovalen Zylinder sowie einen entsprechend geformten Kolben haben. Auch ein rechteckiger Zylinder ist denkbar. Die Form des Zylinders soll so gewählt sein, daß sich insbesondere ein Schloßstraffer ergibt, der einen geringen Bauraum einnimmt. Insbesondere sollte die Form des Zylinders auch die Querschnittsform des Zugübertragungsmittels berücksichtigen, d.h. wenn zum Beispiel ein im Querschnitt längliches Zugübertragungsmittel vorgesehen ist, kann der Zylinder ebenfalls im Querschnitt langgestreckt, zum Beispiel oval oder rechteckig sein.

Weitere Merkmale und Vorteile der Erfindung ergeben sich aus der nachfolgenden Beschreibung und aus den Zeichnungen, auf die im folgenden Bezug genommen wird. In den Zeichnungen zeigen:
Figur 1 eine Längsschnittansicht durch ein Gurtschloß und einen über ein Zugübertragungsmittel mit dem Gurtschloß verbundenen Schloßstraffer gemäß einer bevorzugten Ausführungsform der Erfindung vor einem Straffvorgang,
Figur 2 eine Längsschnittansicht des Schloßstraffers aus Fig. 1 in einer Schnittebene 90° zu der von Fig. 1,
Figur 3 eine Längsschnittansicht durch den Schloßstraffer nach Fig. 1 gegen Ende eines Straffvorgangs, und
Figur 4 einen Schnitt nach der Linie IV-IV in Fig. 3, der den Kolben des Schloßstraffers zeigt.

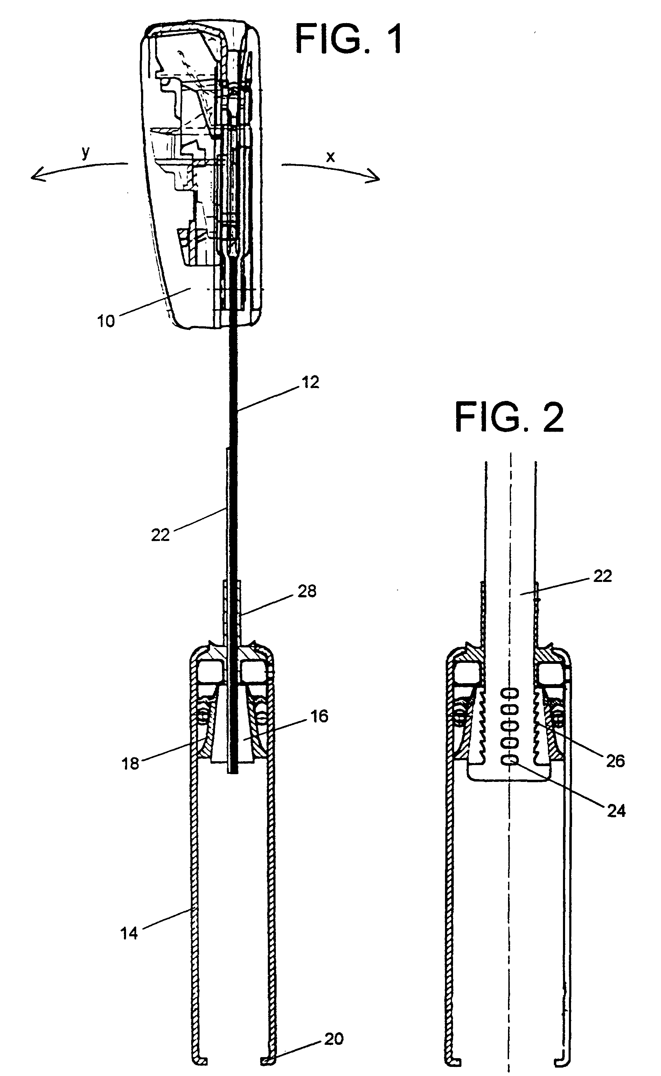

In Figur 1 ist ein Gurtschloß 10 dargestellt, das über ein Zugübertragungsmittel 12 mit einem Schloßstraffer gekoppelt ist. Der Schloßstraffer weist eine Kolben/Zylinder-Einheit auf, die direkt oder indirekt am Fahrzeugboden verankert ist. Ein innerhalb des Zylinders 14 verschiebbar angeordneter Kolben ist fest mit dem Zugübertragungsmittel 12 verbunden. Der Kolben ist in der dargestellten Ausführungsform zweiteilig ausgebildet und besteht aus einem inneren Teil 16 und einem dieses innere Teil 16 umgebende, mit ihm lösbar verbundenen äußeren Teil 18. Das innere Teil 16 kann ein Konus mit rundem, oder wie in Fig. 4 zu erkennen ist, zur platzsparenden Unterbringung des im Querschnitt länglichen Zugübertragungsmittels 12 mit ovalem Querschnitt sein. Bevorzugte Materialien für das Teil 16 sind Aluminium und Messing. Der auf der dem Gurtschloß abgewandten Seite offene Zylinder 14 weist an dem unteren Ende einen Anschlag 20 auf, dessen Innendurchmesser größer als der des inneren Teils 16, aber kleiner als der des äußeren Teils 18 ist.

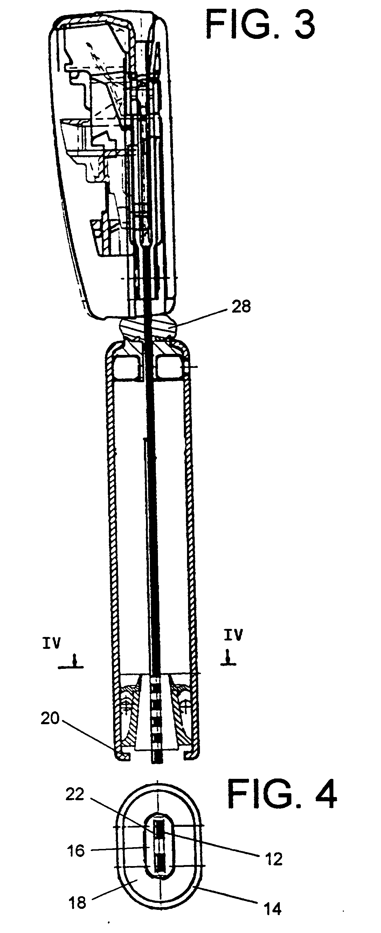

An das Zugübertragungsmittel 12, das in der dargestellten Ausführungsform als Blattfederpaket ausgebildet ist, schmiegt sich auf der dem Fahrzeugsitz abgewandten Seite eine weitere Blattfeder, die als Abstützteil 22 dient, an. Das Blattfederpaket ist, wie Figur 1 zu entnehmen ist, mit seinen breiteren Seiten den Verstellrichtungen X und Y zugewandt. Durch die Dimensionierung und Werkstoffauswahl des Blattfederpakets kann das Biegewiderstandsmoment beliebig eingestellt werden. Dabei ist das Abstützteil 22 nur mit dem inneren Teil 16 des Schloßstraffers verbunden, jedoch nicht mit dem Gurtschloß 10 wie das Zugübertragungsmittel 12. Sowohl das Zugübertragungsmittel 12 als auch das Abstützteil 22 weisen an ihrem kolbenseitigen Ende mehrere Ausnehmungen 24 und eine Verzahnung 26 an ihren schmalen Außenseiten auf, wie in Figur 2 zu sehen ist. Der innere Teil 16 des Kolbens ist auf das Zugübertragungsmittel 12 und das Abstützteil 22 aufgepreßt. Dabei dringt das aufgepreßte Teil 16 in die Ausnehmungen 24 sowie zwischen benachbarte Zähne ein, so daß sich eine formschlüssige Verbindung ergibt.

Der Schloßstraffer hat auch eine Dämpfungseinrichtung. Dazu ist an der gurtschloßseitigen Stirnwand des Zylinders 14 eine das Zugübertragungsmittel 12 und das Abstützteil 22 umgebende Hülse 28 angebracht. Ein bevorzugtes Material für die Hülse 28 ist Aluminium. Sie kann auch im nichtaktivierten Zustand des Schloßstraffers direkt druck- und gasdicht auf das Zugübertragungsmittel 12 und das Abstützteil 22 aufgepreßt sein.

Beim Angurten kann der Fahrzeuginsasse die Steckzunge des Sicherheitsgurtes leicht in das Gurtschloß 10 stecken, da das Abstützteil 22 die Lage der Gurtverankerung, die durch das Zugübertragungsmittel 12 gebildet wird, in y-Richtung, d.h. vom Fahrzeugsitz weg, stabilisiert, womit ein seitliches Ausweichen des Gurtschlosses 10 verhindert wird. Das Verstellen in x-Richtung, d.h. zum Fahrzeugsitz hin, beeinflußt das Abstützteil 22 dagegen nicht. Die Nachgiebigkeit des Zugübertragungsmittels 12 kann daher so groß ausgelegt werden, daß sich bei angelegtem Gurt ein optimaler Gurtbandverlauf einstellen kann.

Im Rückhaltefall wird auf herkömmliche Weise ein Treibsatz innerhalb des Zylinders 14 gezündet, wodurch die Teile 18 und 16 des Kolbens sowie das daran gekoppelte Abstützteil 22, das Zugübertragungsmittel 12 und das Gurtschloß 10 nach unten verschoben werden. Gegen Ende des Straffweges stößt das Gurtschloß 10 gegen die Hülse 28 und verformt diese plastisch, wodurch ein Teil der Energie absorbiert wird und Spannungsspitzen abgebaut werden.

Wie in Figur 3 zu sehen ist, hat der Kolben in etwa dann, wenn die Hülse 28 vollständig plastisch gestaucht ist, das untere Ende des Zylinders 14 erreicht. Sobald das äußere Teil 18 am Anschlag 20 des Zylindergehäuses 14 anschlägt, löst sich das innere Teil 16 von dem äußeren Teil 18, so daß das Teil 18 vom Zugübertragungsmittel 12 und dem Gurtschloß 10 entkoppelt ist. Dadurch können die voneinander entkoppelten Teile separat abgebremst und gedämpft werden, wodurch ein geringerer Bauraum erforderlich ist. Der Straffweg wird durch den Anschlag des Teils 18 an dem unteren Anschlag 20 begrenzt, während des anschließenden Weiterbewegens des Zugübertragungsmittels 12 und des Gurtschlosses 10 werden diese verzögert.

## Patentansprüche

1. Schloßstraffer für ein neben dem Fahrzeugsitz angeordnetes Gurtschloß (10), der eine Kolben/Zylinder-Einheit mit einem Zylinder (14) und einem in dessen Inneren angeordneten Kolben sowie ein den Kolben und das Gurtschloß (10) verbindendes, elastisch auslenkbares Zugübertragungsmittel (12) umfaßt, **dadurch gekennzeichnet, daß** das Biegewiderstandsmoment des Zugübertragungsmittel (12) in Richtung zum Fahrzeugsitz hin geringer ist als in Richtung vom Fahrzeugsitz weg.

2. Schloßstraffer nach Anspruch 1, **dadurch gekennzeichnet, daß** das Biegewiderstandsmoment des Zugübertragungsmittel (12) in Fahrzeuglängsrichtung geringer ist als in Richtung zum Fahrzeugsitz hin.

3. Schloßstraffer nach Anspruch 1 oder 2, **dadurch gekennzeichnet, daß** das Zugübertragungsmittel (12) auf seiner vom Fahrzeugsitz abgewandten Seite an einem elastisch auslenkbaren Abstützteil (22) abgestützt ist.

4. Schloßstraffer nach Anspruch 3, **dadurch gekennzeichnet, daß** das Abstützteil (22) durch wenigstens eine Blattfeder gebildet ist.

5. Schloßstraffer nach einem der vorherigen Ansprüche, **dadurch gekennzeichnet, daß** das Zugübertragungsmittel (12) durch wenigstens eine Blattfeder gebildet ist.

6. Schloßstraffer nach den Ansprüchen 4 und 5, **dadurch gekennzeichnet, daß** das Zugübertragungsmittel (12) und/oder das Abstützteil (22) als Blattfederpaket ausgeführt sind oder zusammen ein Blattfederpaket bilden.

7. Schloßstraffer nach einem der vorherigen Ansprüche, **dadurch gekennzeichnet, daß** der Kolben oder ein Teil (16) des Kolbens auf das Zugübertragungsmittel (12) aufgepreßt ist.

8. Schloßstraffer nach einem der vorherigen Ansprüche, **dadurch gekennzeichnet, daß** der Kolben oder ein Teil des Kolbens (16, 18) aus Aluminium oder Messing besteht.

9. Schloßstraffer nach Anspruch 7 oder 8, **dadurch gekennzeichnet, daß** das Zugübertragungsmittel (12) Ausnehmungen (24) aufweist, in die der aufgepreßte Kolben oder das aufgepreßte Teil (16) des Kolbens zumindest teilweise eindringt, um eine formschlüssige Verbindung zu erreichen.

10. Schloßstraffer nach Anspruch 9, **dadurch gekennzeichnet, daß** die Ausnehmungen durch eine Zahnung an Außenwänden des Zugübertragungsmittels (12) gebildet sind.

11. Schloßstraffer nach einem der vorherigen Ansprüche, **dadurch gekennzeichnet, daß** der Kolben mehrteilig ausgebildet ist und ein am Zugübertragungsmittel (12) befestigtes Teil (16) des Kolbens am Ende des Straffweges und Verzögerns des Kolbens vom übrigen Kolben (18) entkoppelt wird.

12. Schloßstraffer nach Anspruch 11, **dadurch gekennzeichnet, daß** das am Zugübertragungsmittel (12) befestigte Teil (16) des Kolbens ein Konus ist, der in einer entsprechend geformten Ausnehmung im übrigen Kolben (18) aufgenommen ist.

13. Schloßstraffer nach einem der vorherigen Ansprüche, **gekennzeichnet durch** eine Dämpfungseinrichtung zur Absorption von Energie beim Verzögern der Bewegung des Gurtschlosses (10), die an der dem Gurtschloß (10) zugewandten Stirnseite des Zylinders (14) einen hülsenförmigen Abschnitt (28) aufweist, der beim Auftreffen des Gurtschlosses (10) auf ihn am Ende des Straffweges plastisch verformt wird.

14. Schloßstraffer nach Anspruch 13, **dadurch gekennzeichnet, daß** der hülsenförmige Abschnitt (28) im nichtaktivierten Zustand des Schloßstraffers druck- und gasdicht auf das Zugübertragungsmittel (12) aufgepreßt ist.

15. Schloßstraffer nach Anspruch 14, **dadurch gekennzeichnet, daß** der hülsenförmige Abschnitt (28) aus Aluminium besteht.

16. Schloßstraffer nach einem der vorstehenden Ansprüche, **dadurch gekennzeichnet, daß** der Zylinder (14) eine ovale Querschnittsform und der Kolben eine ovale, an der Innenseite des Zylinders anliegende entsprechende Außenkontur hat.

## Claims

1. A buckle tensioner for a belt buckle (10) arranged adjacent to the vehicle seat, comprising a piston/cylinder unit with a cylinder (14) and a piston arranged in the interior thereof, and comprising an elastically deflectable traction transfer means (12) connecting the piston and the belt buckle (10), **characterized in that** the resistance to bending of the traction transfer means (12) is lower in the direction towards the vehicle seat than in the direction away from the vehicle seat.

2. The buckle tensioner according to Claim 1, **characterized in that** the resistance to bending of the traction transfer means (12) is lower in the longitudinal direction of the vehicle than in the direction towards the vehicle seat.

3. The buckle tensioner according to Claim 1 or 2, **characterized in that** the traction transfer means (12) is supported on its side facing away from the vehicle seat by an elastically deflectable support piece (22).

4. The buckle tensioner according to Claim 3, **characterized in that** the support piece (22) is formed by at least one leaf spring.

5. The buckle tensioner according to any of the preceding claims, **characterized in that** the traction transfer means (12) is formed by at least one leaf spring.

6. The buckle tensioner according to Claims 4 and 5, **characterized in that** the traction transfer means (12) and/or the support piece (22) are constructed as a leaf spring assembly or together form a leaf spring assembly.

7. The buckle tensioner according to any of the preceding claims, **characterized in that** the piston or a part (16) of the piston is pressed onto the traction transfer means (12).

8. The buckle tensioner according to any of the preceding claims, **characterized in that** the piston or a part of the piston (16, 18) consists of aluminium or brass.

9. The buckle tensioner according to Claim 7 or 8, **characterized in that** the traction transfer means (12) has recesses (24) into which the pressed-on piston or the pressed-on part (16) of the piston at least partially penetrates in order to achieve a form-fitting connection.

10. The buckle tensioner according to Claim 9, **characterized in that** the recesses are formed by a toothing on outer walls of the traction transfer means (12).

11. The buckle tensioner according to any of the preceding claims, **characterized in that** the piston is constructed in several parts and that a part (16) of the piston secured to the traction transfer means (12) is uncoupled from the remaining piston (18) at the end of the tensioning distance and deceleration of the piston.

12. The buckle tensioner according to Claim 11, **characterized in that** the part (16) of the piston secured to the traction transfer means (12) is a cone which is received in a correspondingly shaped recess in the remaining piston (18).

13. The buckle tensioner according to any of the preceding claims, **characterized by** a damping device for the absorption of energy on deceleration of the movement of the belt buckle (10), which device has a sleeve-shaped section (28) on the end face of the cylinder (14) facing the belt buckle (10), which section (28) is plastically deformed when the belt buckle (10) strikes onto it at the end of the tensioning distance.

14. The buckle tensioner according to Claim 13, **characterized in that** in the non-activated state of the buckle tensioner the sleeve-shaped section (28) is pressed onto the traction transfer means (12) so as to provide pressure- and gas-tightness.

15. The buckle tensioner according to Claim 14, **characterized in that** the sleeve-shaped section (28) consists of aluminium.

16. The buckle tensioner according to any of the preceding claims, **characterized in that** the cylinder (14) has an oval cross-sectional shape and the piston has a corresponding oval outer contour lying against the inner face of the cylinder.

## Revendications

1. Tendeur de serrure pour une serrure de ceinture (10) agencée à côté du siège de véhicule, lequel comprend une unité à piston et cylindre avec un cylindre (14) et un piston agencé à l'intérieur de celui-ci, ainsi qu'un moyen de transmission de traction (12) qui peut défléchir élastiquement et qui relie le piston et la serrure de ceinture (10), **caractérisé en ce que** le couple de résistance à la flexion du moyen de transmission de traction (12) est plus faible en direction vers le siège de véhicule qu'en direction d'éloignement du siège de véhicule.

2. Tendeur de serrure selon la revendication 1, **caractérisé en ce que** le couple de résistance à la flexion du moyen de transmission de traction (12) est plus faible en direction longitudinale du véhicule qu'en direction vers le siège de véhicule.

3. Tendeur de serrure selon la revendication 1 ou 2, **caractérisé en ce que** sur son côté détourné du siège de véhicule, le moyen de transmission de traction prend appui sur un élément d'appui (22) qui peut défléchir élastiquement.

4. Tendeur de serrure selon la revendication 3, **caractérisé en ce que** l'élément d'appui (22) est formé par au moins un ressort à lames.

5. Tendeur de serrure selon l'une des revendications précédentes, **caractérisé en ce que** le moyen de transmission de traction (12) est formé par au moins un ressort à lames.

6. Tendeur de serrure selon les revendications 4 et 5, **caractérisé en ce que** le moyen de transmission de traction (12) et/ou l'élément d'appui (22) sont réalisés sous forme de paquet de ressorts à lames ou forment ensemble un paquet de ressorts à lames.

7. Tendeur de serrure selon l'une des revendications précédentes, **caractérisé en ce que** le piston ou une partie (16) du piston est pressé sur le moyen de transmission de traction (12).

8. Tendeur de serrure selon l'une des revendications précédentes, **caractérisé en ce que** le piston ou une partie (16, 18) du piston est en aluminium ou en laiton.

9. Tendeur de serrure selon la revendication 7 ou 8, **caractérisé en ce que** le moyen de transmission de traction (12) présente des évidements (24) dans lesquels le piston pressé ou la partie pressée (16) du piston pénètre au moins partiellement pour obtenir une liaison par coopérations de formes.

10. Tendeur de serrure selon la revendication 9, **caractérisé en ce que** les évidements sont formés par une denture sur les parois extérieures du moyen de transmission de traction (12).

11. Tendeur de serrure selon l'une des revendications précédentes, **caractérisé en ce que** le piston est réalisé en plusieurs parties, et une partie (16) du piston fixée sur le moyen de transmission de traction (12) est découplée du reste du piston (18) à la fin d'une course de tension et de ralentissement du piston.

12. Tendeur de serrure selon la revendication 11, **caractérisé en ce que** la partie (16) du piston fixée au moyen de transmission de traction (12) est un cône qui est reçu dans un évidement de forme correspondante dans le reste du piston (18).

13. Tendeur de serrure selon l'une des revendications précédentes, **caractérisé par** un dispositif d'amortissement pour absorber l'énergie lors du ralentissement du mouvement de la serrure de ceinture (10), lequel présente sur la face frontale du cylindre (14), qui est tournée vers la serrure de ceinture (10), un tronçon (28) en forme de douille qui est déformé plastiquement lorsque la serrure de ceinture (10) vient le heurter en fin de course de tension.

14. Tendeur de serrure selon la revendication 13, **caractérisé en ce que** le tronçon (28) en forme de douille est pressé de manière étanche à la pression et au gaz sur le moyen de transmission de traction (12) à l'état inactivé du tendeur de serrure.

15. Tendeur de serrure selon la revendication 14, **caractérisé en ce que** le tronçon (28) en forme de douille est en aluminium.

16. Tendeur de serrure selon l'une des revendications précédentes, **caractérisé en ce que** le cylindre (14) a une section transversale de forme ovale, et le piston a un contour extérieur ovale correspondant en appui sur la face intérieure du cylindre.
